# EUROPEAN PATENT APPLICATION

(11) **EP 2 505 072 A1**
(43) Date of publication of application: **03.10.2012**
(21) Application number: 12161879.7
(22) Date of filing: 28.03.2012
(51) Int. Cl.: A23K 1/00, A23K 1/14, A23K 1/16, A23K 1/18

(54) **Feed intake enhancing protein product and the manufacturing method thereof**

(30) Priority: 28.03.2011 TW 100110666
(71) Applicant: Biorich Biotechnology Co., Ltd., Yangmei Township, Taoyuan County 326 (TW)
(72) Inventor: Tarn, Chung-Yiao, Taoyuan County 326 (TW)
(74) Representative: Bittner, Thomas L.

(57) **Abstract**

A method for manufacturing a biochemical product is provided. The method includes steps of providing a plurality of substrate bodies (10), wherein each of the substrate bodies (10) has an outer surface; and adhering a feed intake enhancer (11) onto the outer surface to form the biochemical product. Further, the invention relates to a biochemical product.

## Description

The application claims the benefit of Taiwan Patent Application No. 100110666, filed on March 28, 2011, in the Taiwan Intellectual Property Office, the disclosures of which are incorporated herein in their entirety by reference.

The present invention relates to a feed intake enhancing protein product and the manufacturing method thereof, and more particularly to a protein product manufactured by a liquid feed intake enhancer and the manufacturing method thereof.

Conventionally the feed is usually added with the plasma protein to enhance feed intake. The plasma protein is derived from animal blood, and easily causes the animal which takes the plasma protein infected, since there are usually pathogens such as viruses in the plasma protein. Especially after Creutzfeldt-Jakob disease (CJD) has been occurred, it is prohibited to use the plasma protein for the feed intake enhancer in many areas. Additionally, the plasma protein easily spoils and corrupts, and can not retain the freshness easily. However, if the feed intake enhancing product such as the plasma protein is not added into feed, the amount of taking food of the bred animal will be affected, thereby affecting the growth of the bred animal. Especially for the piglet or the weanling piglet, changing their food into the general feed rashly may make the piglet refuse to take food. Therefore there are some feed intake enhancers in the market, such as lactic-fermented solutions. The conventional method is to mix the liquid feed intake enhancer and the feed powder directly, but there are problems that too few moisture content in the mixture causes a condition of agglomeration, and the mixture has to be dried to powder again. If water is added directly into the mixture during the process of mixing and the mixture is dried to powder again after finishing mixing, the energy will be wasted, and too high drying temperature will change the flavor so that the effect of enhancing feed intake cannot be achieved. Moreover, the protein content and the digestibility of such liquid feed intake enhancer are not as good as those of the plasma protein. In case the digestibility of the mixed feed powder is too low, although the amount of feed taken by the animal is enhanced, too low digestibility will cause too low utility of the feed.

In order to overcome the drawbacks in the prior art, a feed intake enhancing protein product and the manufacturing method thereof are provided. The particular design in the present invention not only solves the problems described above, but also is easy to be implemented. Thus, the present invention has the utility for the industry.

In the present invention, a product of high digestibility and high feed intake is manufactured by a raw material of the plant protein to substitute for the plasma protein. The soybean cells are smashed to 100 µm below to make the cell wall thereof ruptured to increase the digestibility to 90% above preliminarily and increase the reactivity of the later hydrolysis step. The protein of the soybean is broken down to peptides by protease to further increase the digestibility to 95% above, and then the peptides are dried to high digestive protein powder. Taking the high digestive protein powder as substrate, a liquid feed intake enhancer, such as PF-S produced by the Calpis company in Japan, wraps the above-mentioned high digestive protein powder by low-temperature spray drying. The above-mentioned methods of rupturing the cell wall include grind, hydrolysis by cellulose, freezing or high-speed knife collision. The above-mentioned protease can be generated from fermentation of nattokinase or other *Bacillus subtilis*, and the molecular weight of the peptide after hydrolysis is less than 70 KD The temperature for the above-mentioned spray drying is set under 60 °C.

In accordance with one aspect of the present invention, a method for manufacturing a biochemical product is provided. The method includes steps of providing a plurality of substrate bodies, characterized in that each of the substrate bodies has an outer surface; adhering a feed intake enhancer onto the outer surface to form an intermediate; and mixing the intermediate with a substrate to form the biochemical product.

In accordance with another aspect of the present invention, a method for manufacturing a biochemical product is provided. The method includes steps of providing a plurality of substrate bodies, characterized in that each of the substrate bodies has an outer surface; and adhering a feed intake enhancer onto the outer surface to form the biochemical product.

In accordance with a further aspect of the present invention, a biochemical product is provided. The biochemical product includes a plurality of substrate bodies, characterized in that each of the substrate bodies has an outer surface; and a feed intake enhancer adhered onto the outer surface.

The above objects and advantages of the present invention will become more readily apparent to those ordinarily skilled in the art after reviewing the following detailed descriptions and accompanying drawings, in which:
- Fig. 1: shows the method of spray drying according to an embodiment of the present invention;
- Fig. 2: shows the method of batch spray stirring according to an embodiment of the present invention;
- Fig. 3: shows the method of tunnel spray stirring according to an embodiment of the present invention; and
- Figs. 4(a)-4(c): show the structure of the biochemical product according to the present invention.

The present invention will now be described more specifically with reference to the following embodiments. It is to be noted that the following descriptions of preferred embodiments of this invention are presented herein for the purposes of illustration and description only; it is not intended to be exhaustive or to be limited to the precise form disclosed.

The plant raw material such as a legume, an algae, a grain or a single-cell plant is processed with cell wall removal, which can be achieved by grind, hydrolysis by cellulose, freezing or high-speed knife collision, to increase the digestibility of the plant raw material to 90% above preliminarily. The protein of the plant raw material is broken down to peptides by protease to further increase the digestibility to 95% above. The protease of the present invention can be generated from fermentation of nattokinase or other *Bacillus subtilis*, and the molecular weight of the peptide after hydrolysis is less than 70 KD. Taking the hydrolyzed protein as substrate, or further mixed with lactic, soybean powder, fermented legume powder, cornmeal, peptide, live bacterial spore, yeast or antibiotic substance, then a liquid feed intake enhancer is coated onto the substrate by spray drying, characterized in that the liquid feed intake enhancer can be a lactic-fermented solution, a black mushroom extract, a vinyl butanoic acid or a tryptophan. The temperature for spray drying has to be set under 60 °C to avoid destroying the flavor and smell of the liquid feed intake enhancer.

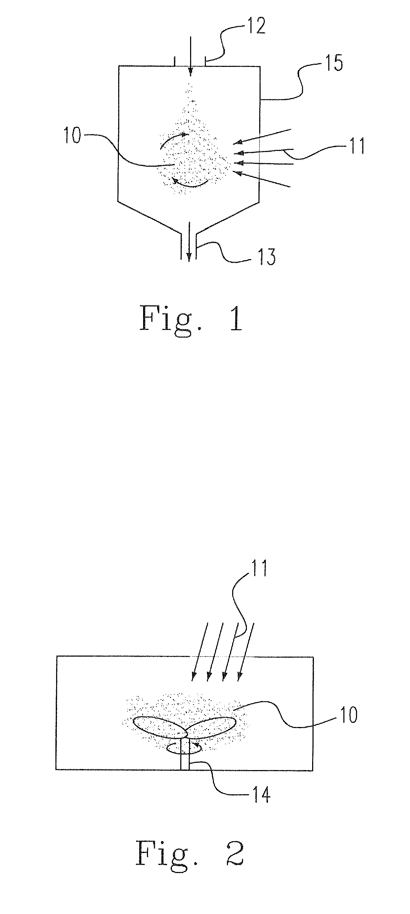

Please refer to Fig. 1, which shows the method of spray drying according to an embodiment of the present invention. As shown in Fig. 1, a substrate 10 is input to a spray drying machine 15 via a feed inlet 12 at the upper side thereof. Then, hot wind and a feed intake enhancer 11 are gushed from the side wall of the chamber of the spray drying machine 15. When the substrate 10 is suspended in the chamber, the low-temperature hot wind whose temperature is lower than 60°C rapidly makes the feed intake enhancer 11 present a spray and coats the feed intake enhancer 11 onto the substrate 10. Finally the wrapped protein product is output via a feed outlet 13 at the lower side of the spray drying machine 15. The purpose of using the low-temperature hot wind is for dryness. Since the substrate 10 is originally in a form of powder whose moisture content is less than 10%, after coated with the liquid feed intake enhancer, the moisture content thereof will go beyond 10%. Therefore the low-temperature hot wind is used to reduce the moisture content of the substrate to be under 10% for the convenience of conservation and transportation. To enhance the efficiency of dryness, a separate outlet of the low-temperature hot wind can be set additionally. Actually the outlet of the low-temperature hot wind is separate from that of the feed intake enhancer. The above-mentioned method is for continuous production. When the substrate 10 is continuously supplied from the feed inlet 12, the wrapped protein product is output via the feed outlet 13.

Another implementing method is batch spray stirring as shown in Fig. 2. A substrate 10 is stirred continuously by a propeller 14, and the low-temperature hot wind from above makes a feed intake enhancer 11 present a spray and coats the feed intake enhancer 11 onto the substrate 10.

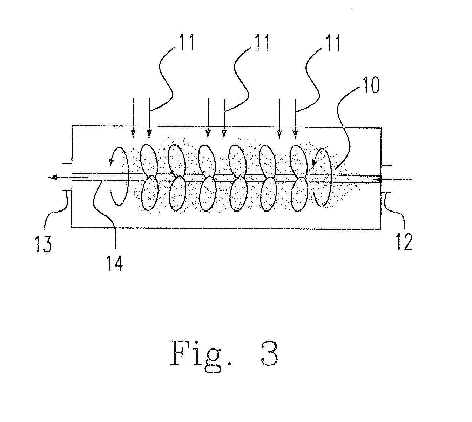

A further implementing method is tunnel spray stirring as shown in Fig. 3. A substrate 10 input from a feed inlet 12 at the right side is stirred continuously by a propeller 14, and the low-temperature hot wind from above makes a feed intake enhancer 11 present a spray and coats the feed intake enhancer 11 onto the substrate 10. Finally the wrapped protein product is output via a feed outlet 13 at the left side. This method is for continuous production. When the substrate 10 is continuously supplied from the feed inlet 12 at the right side, the wrapped protein product is output via the feed outlet 13 at the left side.

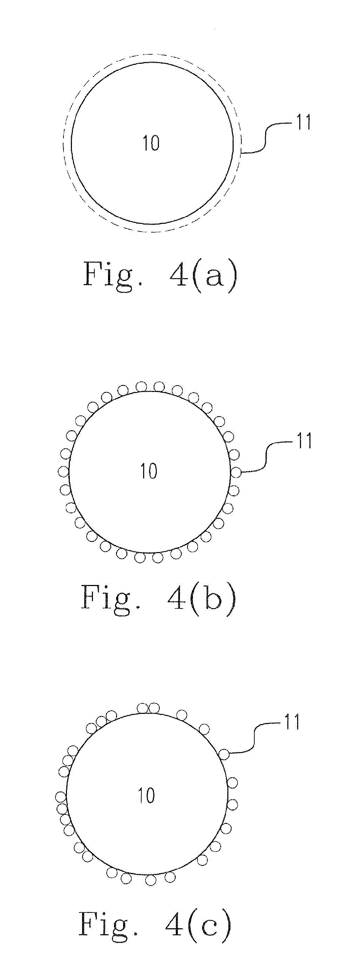

Please refer to Figs. 4(a)-4(c), which show the structure of the biochemical product according to the present invention. In Fig. 4(a), a substrate 10 is coated with a thin layer of the feed intake enhancer 11. In other embodiments as shown in Figs. 4(b) and 4(c), a feed intake enhancer 11 dried into small particles during the process of spray drying uniformly or non-uniformly adheres onto a substrate 10.

After the feed intake enhancer 11 is coated onto the substrate 10 by spray drying, batch spray stirring or tunnel spray stirring, the wrapped protein product has a concentration of the feed intake enhancer 11 in a range of 10-20%, and the wrapped protein product can further be mixed with other substrates to form complete feed whose final concentration of the feed intake enhancer 11 is in a range of 0.1-0.3%.

### Embodiments

1. A method for manufacturing a biochemical product, characterized by comprising steps of providing a plurality of substrate bodies, wherein each of the substrate bodies has an outer surface; adhering a feed intake enhancer onto the outer surface to form an intermediate; and mixing the intermediate with a substrate to form the biochemical product.
2. The method of Embodiment 1, characterized in that the adhering step comprises one selected from a group consisting of steps of coating, spreading, uniform adhering and non-uniform adhering.
3. The method of any one of Embodiments 1-2, characterized in that the feed intake enhancer comprises a liquid feed intake enhancer.
4. The method of any one of Embodiments 1-3, characterized in that the liquid feed intake enhancer comprises one selected from a group consisting of a lactic-fermented solution, a black mushroom extract, a vinyl butanoic acid and a tryptophan.
5. The method of any one of Embodiments 1-4, characterized in that the step of adhering the feed intake enhancer onto the outer surface comprises one selected from a group consisting of steps of spray drying, batch spray stirring and tunnel spray stirring.
6. The method of any one of Embodiments 1-5, characterized in that the intermediate has a first concentration of the liquid feed intake enhancer in a range of 10-20%.
7. The method of any one of Embodiments 1-6, characterized in that the biochemical product has a final concentration of the liquid feed intake enhancer in a range of 0.1-0.3%.
8. The method of any one of Embodiments 1-7, characterized in that the step of adhering the feed intake enhancer onto the outer surface has an operating temperature lower than 60°C.
9. The method of any one of Embodiments 1-8, characterized in that each of the plurality of substrate bodies and the substrate comprises one selected from a group consisting of lactic, soybean powder, fermented legume powder, cornmeal, hydrolyzed protein, peptide, live bacterial spore, yeast, antibiotic substance and a combination thereof.
10. The method of any one of Embodiments 1-9, characterized in that the hydrolyzed protein is hydrolyzed from one selected from a group consisting of a legume, an algae, a grain, a single-cell plant and a combination thereof.
11. The method of any one of Embodiments 1-10, characterized in that the hydrolyzed protein is hydrolyzed by a protease.
12. The method of any one of Embodiments 1-11, characterized in that the protease is fermented from a microorganism.
13. The method of any one of Embodiments 1-12, characterized in that the microorganism is one of *Bacillus subtilis* and *Bacillus subtilis natto.*
14. A method for manufacturing a biochemical product, characterized by comprising steps of providing a plurality of substrate bodies, wherein each of the substrate bodies has an outer surface; and adhering a feed intake enhancer onto the outer surface to form the biochemical product.
15. The method of Embodiment 14, characterized in that the adhering step comprises one selected from a group consisting of steps of coating, spreading, uniform adhering and non-uniform adhering.
16. The method of any one of Embodiments 14-15, characterized in that the feed intake enhancer comprises a liquid feed intake enhancer.
17. The method of any one of Embodiments 14-16, characterized in that the liquid feed intake enhancer comprises one selected from a group consisting of a lactics-fermented solution, a black mushroom extract, a vinyl butanoic acid and a tryptophan.
18. The method of any one of Embodiments 14-17, characterized in that the step of adhering the feed intake enhancer onto the outer surface comprises one selected from a group consisting of steps of spray drying, batch spray stirring and tunnel spray stirring.
19. A biochemical product, characterized by comprising a plurality of substrate bodies, wherein each of the substrate bodies has an outer surface; and a feed intake enhancer adhered onto the outer surface.
20. The biochemical product of Embodiment 19, characterized by being a feed of a piglet.

Based on the above, the present invention effectively solves the problems and drawbacks in the prior art, and thus it fits the demand of the industry and is industrially valuable.

## Claims

1. A method for manufacturing a biochemical product, **characterized by** comprising steps of:
- providing a plurality of substrate bodies (10), wherein each of the substrate bodies (10) has an outer surface; and
- adhering a feed intake enhancer (11) onto the outer surface to form the biochemical product.

2. The method as claimed in Claim 1, **characterized by** further comprising a step mixing the biochemical product with a substrate (10) to form a second biochemical product.

3. The method as claimed in any one of Claims 1 to 2, **characterized in that** the adhering step comprises one selected from a group consisting of steps of coating, spreading, uniform adhering and non-uniform adhering.

4. The method as claimed in any one of Claims 1 to 3, **characterized in that** the feed intake enhancer (11) comprises a liquid feed intake enhancer (11).

5. The method as claimed in any one of Claims 1 to 4, **characterized in that** the liquid feed intake enhancer (11) comprises one selected from a group consisting of a lactic-fermented solution, a black mushroom extract, a vinyl butanoic acid and a tryptophan.

6. The method as claimed in any one of Claims 1 to 5, **characterized in that** the step of adhering the feed intake enhancer (11) onto the outer surface comprises one selected from a group consisting of steps of spray drying, batch spray stirring and tunnel spray stirring.

7. The method as claimed in any one of Claims 1 to 6, **characterized in that** the biochemical product has a first concentration of the liquid feed intake enhancer (11) in a range of 10-20%.

8. The method as claimed in any one of Claims 1 to 7, **characterized in that** the second biochemical product has a final concentration of the liquid feed intake enhancer (11) in a range of 0.1-0.3%.

9. The method as claimed in any one of Claims 1 to 8, **characterized in that** the step of adhering the feed intake enhancer (11) onto the outer surface has an operating temperature lower than 60 °C .

10. The method as claimed in any one of Claims 1 to 9, **characterized in that** each of the plurality of substrate bodies (10) and the substrate (10) comprises one selected from a group consisting of lactic, soybean powder, fermented legume powder, cornmeal, hydrolyzed protein, peptide, live bacterial spore, yeast, antibiotic substance and a combination thereof.

11. The method as claimed in any one of Claims 1 to 10, **characterized in that** the hydrolyzed protein is hydrolyzed from one selected from a group consisting of a legume, an algae, a grain, a single-cell plant and a combination thereof.

12. The method as claimed in any one of Claims 1 to 11, **characterized in that** the hydrolyzed protein is hydrolyzed by a protease.

13. The method as claimed in any one of Claims 1 to 12, **characterized in that** the protease is fermented from one of *Bacillus subtilis* and *Bacillus subtilis natto.*

14. A biochemical product, **characterized by** comprising:
- a plurality of substrate bodies (10), wherein each of the substrate bodies (10) has an outer surface; and
- a feed intake enhancer (11) adhered onto the outer surface.

15. The biochemical product as claimed in Claim 14, **characterized by** being a feed of a piglet.
